# EUROPEAN PATENT APPLICATION

(11) **EP 4 851 006 A1**
(43) Date of publication of application: **09.12.2026**
(21) Application number: 26315229.0
(22) Date of filing: 26.05.2026
(51) Int. Cl.: B61D 17/04, B23K 26/21, B23K 33/00, B61F 1/00, B61F 5/52, B21D 39/03

(54) **STRUCTURAL ASSEMBLY FOR A RAILWAY VEHICLE BODY, RAILWAY VEHICLE BODY AND PRODUCTION METHOD**

(30) Priority: 06.06.2025 EP 25305831
(71) Applicant: ALSTOM Holdings, 93400 Saint-Ouen-sur-Seine (FR)
(72) Inventor: Hartmann, Stefan, 1220 Wien (AT); Otte, Hauke, 49479 Ibbenbüren (DE); Laflamme, Martin, Québec, G0R 2T0 (CA)
(74) Representative: Patentanwälte Bressel und Partner mbB

(57) **Abstract**

The invention relates to a structural assembly (1, 21, 41, 51, 61), configured to be integrated in a railway vehicle body, comprising
- a first sheet metal element (11), comprising a first edge (E1) with a plurality of taps (T, T2, T3),
- a second sheet metal element (12), comprising a second edge (E2) with a plurality of notches N, N2, N3),
- a third sheet metal element (13), comprising a third edge (E3) with at least one protrusion (P),
- a fourth sheet metal element (14), comprising at least one slot-shaped hole (H),

wherein each tap (T, T2, T3) of the plurality of taps (T, T2, T3) is received, in each case, in a notch (N, N2, N3) of the plurality of notches N, N2, N3),
wherein the first edge (E1) and the second edge (E2) are connected to each other by a laser-welded joint (LW),
wherein the at least one protrusion (P) is received in the at least one slot-shaped hole (H),
wherein the at least one protrusion (P) is connected to the fourth sheet metal element (14) by a further laser-welded joint (FLW) along the at least one slot-shaped hole (H).

Furthermore, a railway vehicle body and a method for producing the structural assembly (1, 21, 41, 51, 61) are proposed.

## Description

The present invention relates to a structural assembly configured to be integrated in a railway vehicle body, a railway vehicle body comprising the structural assembly and a method for producing the structural assembly.

A body of a railway vehicle is - among other parts - constructed from a plurality of assemblies. Examples for such assemblies are: a bolster or a spring dome. Such assemblies comprise sheet metal parts being connected to each other.

It is known to connect such sheet metal parts for example by MAG welding. In this case, relatively thick and therefore heavy sheets are necessary, since, due to MAG welding, distortion due to thermal stresses occurs. To observe required tolerances, machining or milling afterwards is necessary. Furthermore, MAG welding requires extensive and time-consuming manual work.

It is an objective of the present invention to eliminate the mentioned deficiencies - thus, to reduce the weight of structural assemblies and to reduce or eliminate work necessary due to MAG welding and machining or milling afterwards while observing required tolerances and maintaining load capacity and mechanical resilience. Overall objectives are a reduction of production costs, an acceleration of production, a weight reduction of railway vehicles and, thus, a reduction of operating costs.

According to a basic thought of the invention, a structural assembly is proposed comprising sheet metal elements. A sheet metal element can be, in other words a sheet metal part. The part can comprise flat and/or curved and/or bent and/or connected sections of sheet metal.

A first sheet metal element can be provided. It can comprise taps at one of its outer edges. This outer edge can be named "first edge". The taps can be, in other words, protrusions or protruding sections, particularly small protruding sections.

A second sheet metal element can be provided. It can comprise notches at one of its outer edges. This outer edge can be named "second edge". The notches can be, in other words, for example recesses, gaps, pits or grooves. The taps and the notches can be configured and/or arranged to mesh and/or to interlock in an assembled state of the assembly. The taps and the notches can be configured to fit together and establish a connection, particularly a longitudinal connection with regard to a longitudinal direction of the first edge and the second edge. The connection can particularly be a (geometrically) form-fitting connection - particularly a form fitting connection with regard to the longitudinal connection blocking movements of the first plate relative to the second plate along the longitudinal direction.

The connection can be orthogonal, meaning that connected sections of the first sheet metal element and the second sheet metal element can be oriented orthogonally to each other or along orthogonal planes at the connection. The connection being orthogonal can also mean, that tangents of connected sections of the first sheet metal element and the second sheet metal element can be oriented orthogonal to each other or along orthogonal planes at the connection (particularly in case of a curved or bent first part and/or a curved or bent second part).

The wording "along" generally can allow for deviations from a strict orthogonal orientation, for example by a maximum of 5 or 7 or 10 or 15 or 20 or 25 or 30 degrees.

A laser-welded joint can be provided to fixedly connect the first sheet metal element and the second sheet metal element. The laser-welded joint can particularly comprise or be an I-seam.

Furthermore, a third sheet metal element can be provided. It can comprise at least one protrusion, particularly at one of its outer edges. This outer edge can be named "third edge". The protrusion can be, in other words, a protruding section or an overhang or a prolonged section.

A fourth sheet metal element can be provided. It can comprise at least one hole. The hole can be particularly a slot-shaped hole or a slit or a slot. The hole can be surrounded, particularly entirely surrounded, by material of the fourth sheet metal element. The hole can be amidst the fourth sheet metal element. It can be somewhere on the fourth sheet metal element. It can reach through the fourth metal sheet element.

"At least one" means "one or more of" or "one of or a plurality of".

The at least one protrusion and the at least one hole can be configured and/or arranged in a way that, in an assembled state of the structural assemble, the at least one protrusion is situated in and enclosed by the at least one hole. The at least one protrusion and the at least one hole can be configured and/or arranged to mesh and/or to interlock. The at least one protrusion and the at least one hole can to fit together and establish a connection, particularly a longitudinal connection with regard to a longitudinal direction of the third edge. The connection can particularly be a form-fitting connection - particularly a form fitting connection with regard to the longitudinal connection blocking movements of the third plate relative to the fourth plate along the longitudinal direction.

The connection can be orthogonal, meaning that at least one connected section of the third sheet metal element and the fourth sheet metal element can be oriented orthogonal to each other or along orthogonal planes at the connection. The connection being orthogonal can also mean, that tangents of connected sections of the third sheet metal element and the fourth sheet metal element can be oriented orthogonal to each other or along orthogonal planes at the connection (particularly in case of a curved or bent third part and/or a curved or bent fourth part).

A further laser-welded joint can be provided to connect the third sheet metal element and the fourth sheet metal element. The further laser-welded joint can particularly comprise or be an I-seam. The further laser-welded joint can be arranged (at least partially or completely) around and/or along the at least one protrusion. The further laser-welded joint can be arranged (at least partially or completely) around and/or along the inner edges of the hole.

In particular, it is proposed a structural assembly, configured to be integrated in a railway vehicle body, comprising
- a first sheet metal element, comprising a first edge with a plurality of taps,
- a second sheet metal element, comprising a second edge with a plurality of notches,
- a third sheet metal element, comprising a third edge with at least one protrusion,
- a fourth sheet metal element, comprising at least one slot-shaped hole,

wherein each tap of the plurality of taps is received, in each case, in a notch of the plurality of notches,
wherein the first edge and the second edge are connected to each other by a laser-welded joint,
wherein the at least one protrusion is received in the at least one slot-shaped hole,
wherein the at least one protrusion is connected to the fourth sheet metal element by a further laser-welded joint along the at least one slot-shaped hole.

Reference is fully made to the statements (also including advantages) above. "Received" can also mean "inserted", "held" or "enclosed". "Along" can mean "partially or completely encircling the one slot-shaped hole".

The railway vehicle can particularly be a lightweight rail vehicle like a tram vehicle, a city railway vehicle or an underground railway vehicle. However, the invention is also applicable to other types of railway vehicles (regional train vehicles, longer distance train vehicles, highspeed train vehicles, freight train vehicles).

The first sheet metal element, the second sheet metal element, the third sheet element and/or the fourth sheet element can be thin and/or comprise a thin part - that is, one dimension can be very small compared to the other two. The small dimension can, for example be below 30 % or 20 % or 10 % or 5 % or 3 % or 2 % or 1 % of the smaller of the two larger dimensions. The first sheet metal element, the second sheet metal element, the third sheet element and/or the fourth sheet element can be bent, curved and/or even or comprise bent, curved and/or even sections. The first sheet metal element, the second sheet metal element, the third sheet element and/or the fourth sheet element can comprise or be connected to one or more sheet metal parts and/or additionally parts not made of sheet metal. Sheet metal elements do not have to be made entirely from sheet metal. Sheet metal parts can comprise at least a part or a section made from sheet metal.

The first sheet metal element and the second sheet metal element can be, for example, parts of a beam or a beam-shaped section (for example as parts of a spring dome or a bolster or another type of structural assembly) with a box profile. The third sheet metal element and the fourth sheet metal element can be, for example, parts of a structure enclosing a volume, for example as part of a spring dome, or a bolster. The third sheet metal element, for example, can be a rib or a crosspiece between two larger plates, wherein one of the larger plates is part of the fourth sheet metal element.

The first sheet metal element can be the third or the fourth sheet metal element. Alternatively, the second sheet metal element can be the third or the fourth sheet metal element.

The first sheet metal element, the second sheet metal element, the third sheet metal element and the fourth sheet metal element can build up or be part of the structural assembly. The first edge and the second edge can have compatible - that can mean "longitudinally connectable" - geometries. The first edge, the second edge and/or the third edge (or, more exactly, the at least one protrusion) and the at least one slot-shaped hole can be straight or curved or comprise curves. For example, the first edge and the second edge can be both straight or comprise compatible curves allowing for a connection of the first edge and the second edge along a straight line or a curvature, respectively. The connection can be orthogonal or along orthogonal planes. For example, the third edge (or, more specifically, the at least one protrusion) and the at least one slot-shaped hole can be both straight or comprise compatible curves allowing for a connection of the at least one protrusion and the at least one slot-shaped hole along a straight line or a curvature, respectively. The connection can be orthogonal or along orthogonal planes.

The first sheet metal element and the second sheet metal element can be oriented orthogonal to each other and/or along orthogonal planes. This can mean, that a first section of the first sheet metal element comprising the first edge and a second section of the second sheet metal element comprising the second edge can be oriented orthogonal to each other and/or along orthogonal planes. This can be also applicable to situations, in which the first sheet metal element and/or the second sheet metal element are bent and/or curved. In this case, the first section can be a narrow section at the first edge and/or the second section can be a narrow section at the second edge.

The third sheet metal element and the fourth sheet metal element can be oriented orthogonal to each other and/or along orthogonal planes. This can mean, that a third section of the third sheet metal element comprising the at least one protrusion and a fourth section of the fourth sheet metal element comprising the at least one slot-shaped hole can be oriented orthogonal to each other and/or along orthogonal planes. This can be also applicable to situations, in which the third sheet metal element and/or the fourth sheet metal element are bent and/or curved. In this case, the third section can be a narrow section at the third edge and/or the fourth section can be a narrow section at the fourth edge.

The taps can be geometrically configured to become slimmer (fully or at least in a section) when regarded in the direction from their base to their end, wherein the base can be situated at continuous material of the first sheet metal element and the end is situated away from the continuous material (height direction of the taps). By this, in production, fixed pre-positioning and/or basting of the first sheet metal element and the second sheet metal element - for example by welding, for example arc welding, in gaps between the taps (at their outer surfaces) and the notches (at their inner surfaces) - is advantageously possible.

Generally speaking, not only related to the embodiment described in the preceding paragraph, "height" does not limit the description to a specific orientation of the respective tap, notch or other geometric shape. For example, the height direction of the tap may be oriented in practice in horizontal direction or in any other direction. Furthermore, the height directions of the tap and of a corresponding notch may not correspond to each other even in the same embodiment. To be more specific, the height direction o the notch may be oriented perpendicularly to the height direction of the tap that is received by the notch. If "height" would be considered as misleading, "length" could be used instead of "height".

The taps can be, for example, cuboids (that is, they can be rectangles when regarded in a longitudinal section). The taps can comprise a first surface being oriented orthogonally to the height direction. This can be, particularly, the case, when the taps are cuboids or nearly cuboids. The first surface can be a top surface of the taps. The formulation "of the taps" can mean, that reference is made to each single one of the plurality of taps. The formulation "of the taps" can mean "of each of the taps" and/or "in each case for each of the taps".

Alternatively or additionally, the first surface can be situated on top of the taps. Alternatively or additionally, the first surface can be an outer surface of the taps. "Outer" can mean, that the first surface is situated at a distal end and/or at a distal section of the taps. Alternatively or additionally, the first surface can be a distal surface. Alternatively or additionally, the first surface can be situated at a distal section of the tap. A distal section can be, for example, the distal 70-0 % or 50-0% or 30-0 % or 10-0 % of the tap. Alternatively or additionally, the first surface can be a surface facing into or along a direction which points from the bottom to the top of the tap (this direction can be the height direction). Alternatively or additionally, the first surface can be a contact surface, particularly for contact with welding material of arc welding. Embodiments, in which at least one further surface is provided, wherein the at least one further surface is situated further or less far in or along said direction than the first surface, are possible. The further surface can have the same function as the first surface. The further surface can be a contact surface, particularly for contact with welding material of arc welding (particularly for basting). Alternatively or additionally, the first surface can be a boundary wall of a space limited by the first surface and inner surfaces of the notch, in which the tap is received. The space can be configured to receive welding material of arc welding (particularly for basting).

Alternatively, the taps can be, for example, triangular prisms (that is, they can be triangles when regarded in a longitudinal section). Alternatively, the taps can be for example trapezoidal prisms (that is, they can be trapezoids when regarded in a longitudinal section).

The taps can comprise a first section with a cuboid shape - which can be called sockets - and a second section with a triangular prism shape (that is, they can have a rectangular part and a triangular part when regarded in a longitudinal section). Between the first section and the second section, corner smoothing radiuses can be provided (for example 0,25 mm). The top of the triangular prism shape can comprise a smoothing radius (for example 0,5 mm). The sockets can allow advantageously for exact placement (pre-positioning) of the taps in the notches. Between outer surfaces of the triangular prism shapes and inner surfaces of the notches, fixed pre-positioning and/or basting of the first sheet metal element and the second sheet metal element - for example by welding, for example arc welding, in gaps between the taps (at their outer surfaces) and the notches (at their inner surfaces) - is advantageously possible.

Alternatively, the taps can comprise a first section with a cuboid shape - called sockets - and a second section with a trapezoidal prism shape. The taps can comprise, regardless of their shape, smoothing radiuses (for example 0,25 mm).

The taps can be geometrically configured to have the same width and/or the same depth along their height direction. The height of the taps can be constant or nearly constant along their width direction and/or along their depth direction. The width direction of the taps can be a direction, which is parallel to a longitudinal course of the first edge (which can be a direction inside a plane spanned by the first sheet metal element). The depth direction of the taps can be a direction of the thickness of the first sheet metal element. The depth direction of the taps can be orthogonal to the width direction of the taps and/or orthogonal to the course of the second edge. The terms "height direction" and/or "width direction" and/or "depth direction" of the taps can apply to at least one single tap of the plurality of taps.

The notches can be geometrically configured to become wider (fully or at least in a section) when regarded in the direction from their base to their end (this can be the height direction of the notches), wherein the base can be situated at continuous material of the second sheet metal element and the end is situated away from the continuous material (height direction of the notches). By this, in production, fixed pre-positioning and/or basting of the first sheet metal element and the second sheet metal element- for example by welding, for example arc welding, in gaps between the taps (at their outer surfaces) and the notches (at their inner surfaces) - is advantageously possible. Alternatively, the notches can be geometrically configured to have at least nearly the same width and/or the same depth along their height direction. The height of the notches can be constant along their width direction and/or along their depth direction. The width direction of the notches can be a direction, which is parallel to a course of the second edge (which can be a direction inside a plane spanned by the second sheet metal element). The depth direction of the notches can be a direction of the thickness of the second sheet metal element. The depth direction of the notches can be orthogonal to the width direction of the notches and/or orthogonal to the course of the second edge. The terms "height direction" and/or "width direction" and/or "depth direction" of the notches can apply to at least one single notch of the plurality of notches.

The notches can comprise, regardless of their shape, smoothing radiuses (for example 0,25 mm).

The taps can comprise even or nearly even or bevelled or chamfered outer surfaces. The notches can comprise even or nearly even or bevelled or chamfered inner surfaces. For example, a bevelled or chamfered tap may be received by a rectangular shaped notch.

Each tap being received in a notch can mean, that taps are enclosed sideways by two inner walls of the notches. Particularly between the taps and the inner walls of the notches, welding seams can be provided, for example by arc welding, serving as means for fixed pre-positioning and/or basting. This is advantageously possible if the taps can be geometrically configured to become slimmer when regarded in the direction from their base to their end (height direction of the taps) and/or the notches are geometrically configured to become wider when regarded in the direction from their base to their end (height direction of the notches). In these cases, welding seams, for example HV-seams or HY-seams or Y-seams or V-seams, can be provided between the taps (at their outer surfaces) and the notches (at their inner surfaces) to allow for fixed pre-positioning and/or basting during production of the structural assembly.

If each tap of the plurality of taps comprises a first surface extending along a plane that is oriented orthogonally to a height direction of the tap and/or is a cuboid, a space for a welding seam to allow for fixed pre-positioning and/or basting can advantageously be available. The space can be defined, in each case, by inner surfaces of the notch and the first surface of the tap. In this space, the welding seam can advantageously be placed. Only one single welding seam can advantageously be necessary for one tap-notch basting connection, facilitating fixed pre-positioning and/or basting.

By fixed pre-positioning and/or basting, the shape accuracy of the laser-welded joint (and thus of the assembly as a whole) can be advantageously improved.

Sheet thickness of the first, the second, the third and/or the fourth sheet metal element can be in the range of millimetres, for example 2-3 mm, 3-4 mm, 4-5 mm, 5 mm, 5-6 mm, 6-7 mm, 7-8 mm, 8-10 mm, 10 mm or 10-15 mm. The sheets can be, for example, made of stainless-steel, carbon steel, aluminium or other metals.

The first sheet metal element and the second sheet metal element can be arranged orthogonally to each other (or, in other words along orthogonal planes) at the laser-welded joint. The third sheet metal element (or, more exactly, the at least one protrusion) and the fourth sheet metal element (or, more exactly, the at least one slot-shaped hole) can be arranged orthogonally to each other (or, in other words, along orthogonal planes) at the further laser-welded joint.

The laser-welded joint can be situated at sections of the first edge without or between taps and sections of the second edge without or between notches. The laser-welded joint can be or comprise an I-seam between the first edge and the second edge. The laser-welded joint can be suspended in sections of the first edge, in which a tap is present and/or in sections of the second edge, in which a notch is present. Alternatively, the laser-welded joint can be continued in those sections of the first edge and/or those sections of the second edge. The laser-welded joint can be configured corresponding to the geometries of the taps by surrounding them and/or following their contour or, alternatively, can be configured to overrun the taps, so that a steady line geometry of the laser-welded joint is achieved. In both cases, rotation of a laser head is advantageously not necessary.

The further laser-welded joint can be situated at, along and/or around the gap between outer surfaces of the at least one protrusion and inner surfaces of the at least one slot-shaped hole. The laser-welded joint can be or comprise an I-seam between the at least one protrusion and the inner surfaces of the at least one slot-shaped hole.

The proposed structural assembly provides several advantages when compared to the state-of-the-art: Laser welding is a highly precise, high-quality and fast welding method with only small material distortions, since heat-affected zones are small. Reliability is improved, production time is reduced, a high level of automatization can be achieved. Quality is consistent. Material deformation is low. Thus, post-treatment (machining, milling) can be reduced or avoided, improving cost- and time-efficiency. Due to small material distortions, thin sheet metal elements can be used to fulfil tolerances. By this, the weight of the structural assembly can be reduced.

A connection between the first sheet metal element and the second sheet metal element can describe a connection at a corner region or an end region or an outer part of the structural assembly. A further connection between the third sheet metal element and the fourth sheet metal element can describe a connection in an inner region of the fourth sheet metal element. That is, all major connections of the structural assembly can be realised by laser-welding, since material distortions are - if any - only present to a very small degree and do not cause geometrical deviations that would influence said connection and said further connection mutually by perpetuation along the structural assembly.

This can mean, that the further connection between the third sheet metal element and the fourth sheet metal element can be realised in a deviation-free (and thus unproblematic) way, even, if the connection between the first sheet metal element and the second sheet metal element is already established (or vice versa) - particularly, if the first sheet metal element or the second sheet metal element is situated (or is close or connected to) the third sheet metal element or the forth sheet metal element.

Tooling or straightening are not necessary. Rotation of the laser head is not necessary regarding the laser-welded joint and the further laser-welded joint.

Furthermore, self-positioning features of the taps and the notches simplify production of the structural assembly further. Poka-yoke can be used to avoid mistakes in assembling. For example, different kinds of taps and notches can be used in different sheet metal elements . building a box-profile beam. Taps with chamfered or bevelled inner surfaces (or, generally taps that become narrower in their height direction) and/or notches with chamfered or bevelled outer surfaces (or, generally taps that become wider in their height direction) advantageously allow for self-pre-positioning prior to basting. Chamfered or bevelled protrusions enable easy assembly and facilitate pre-positioning.

A further advantage is, that laser welding can be done entirely from the outside.

The mentioned advantages lead to weight reduction, production cost reduction, vehicle operating costs reduction, production time reduction and production work reduction. A higher degree of automatization is furthermore possible by using laser-welding.

In an advantageous embodiment of the proposed structural assembly
- each tap of the plurality of taps comprises a first surface extending along a plane that is oriented orthogonally to a height direction of the tap.

Reference is made to further statements (also including advantages) with regard to this embodiment.

The plane can have a normal direction in or along the height direction of the tap. The plane particularly can be understood as virtual plane. The first surface can be an even surface laying entirely or nearly entirely or partially in the plane. This meaning can be generally included in "along". "Along" can also mean that the first surface can comprise slight deviations from the plane, for example, deviation angles of a maximum of 1 degree or 2 degrees or 5 degrees or 10 degrees or 15 degrees or deviation distances of, at maximum, 1 or 2 or 5 mm, for example. Such a deviation angle or such deviation angles or such a deviation distance can apply to a part of or several parts of the first surface or to the whole first surface.

Generally, "along" can mean, that slight deviations are allowed, for example, deviation angles of a maximum of 5 degrees or 10 degrees or 15 degrees or, for example, deviation distances of, at maximum, 1 or 2 or 5 mm. Generally, "along" can also include exact geometric correspondence.

The first surface can particularly have a depth and a width that comply with or comply nearly with (respectively) a height and a width of the notch in which the tap is received, particularly in a way that interlocking and/or receiving of the tap in the notch is possible. Generally, "nearly" can mean, that slight differences are allowed, for example, 1 % or 2 % or 5 % or 10 % or 15 % or 20 %, for example with regard to a dimension being smaller (or bigger) than another given dimension. The first surface can have such differences in a way that it is, in its depth and its width, slightly smaller than the height and the width of the notch in which the tap is received, so that the tap can fit into the notch. The tap can interlock with the notch, particularly interlock with a side of the notch (this can be understood in a way that the tap enters a side of the notch). The height direction of the tap can be parallel to or be situated along the depth direction of the notch, particularly, if the first sheet metal element and the second sheet metal element are situated orthogonally or along orthogonal directions or planes to each other.

The height of the tap can be smaller than the depth of the notch in which the tap is received. Particularly, the height of the tap can be in the interval of 90-70 % or 70-50 % or 50-30 % or 30-10 % of the depth of the notch in which the tap is received. Like this, a space for an arc welding seam can advantageously be available

The presented embodiment allows for easy pre-positioning and basting, particularly by means of arc welding, wherein, for each tap-notch combination, only a single arc welding seam is necessary. This aspect facilitates basting. Pre-positioning and basting can be performed manually, semi-automatically and automatically without restriction to a specific type of arc welding seam. Different types of arc welding can be used, for example discrete tack welds, short welding sections, arc filled welds, point shaped arc tack welds and/or continuous linear arc welding lines.

Furthermore, the stability of the inventive structural assembly is improved, since single arc welding seams contribute to the overall structural strength of the structural assembly, regardless of the fact that their general purpose is basting for prepositioning. This aspect is further improved particularly in comparison to embodiments, in which more than one arc welding seam is used for one single tap-notch combination (taps having bevelled or chamfered outer surfaces).

Furthermore, particularly, if a space for the arc welding seam is provided, the laser-welded joint - when continued across the arc welding seam - has a high quality and high mechanical strength in the area of the tap-notch combination and nearby, since a change in the geometry of the laser-welded joint is not necessary or only small.

In an advantageous embodiment of the proposed structural assembly
- the first surface is even or nearly even.

Reference is made to further statements (also including advantages) with regard to this embodiment. In this embodiment, the first surface is easy to produce. Smoothing radiuses can be provided at edges of the first surface. The presented embodiment allows, that a cuboid or nearly cuboid space for an arc welding seam can be provided allowing for a particularly strong arc welding connection. Furthermore, an even distribution of arc welding material allows for a better geometry of the laser-welded joint in the area of the tap-notch combination and nearby. This can result in a high quality and high mechanical strength of the laser-welded joint in the area of the tap-notch combination.

In an advantageous embodiment of the proposed structural assembly
- the first surface of each tap of the plurality of taps extends nearly across the width and/or the height of the notch in which the tap is received.

The presented embodiment allows, that a cuboid or nearly cuboid space for an arc welding seam can be provided over the whole available space inside the notch in which the tap is received. This aspect allows further for a particularly strong arc welding connection. Furthermore, an even distribution of arc welding material over the whole space available inside the notch allows for a beneficial geometry of the laser-welded joint in the area of the tap-notch combination and nearby. This can result in a high quality and high mechanical strength of the laser-welded joint in the area of the tap-notch combination.

In an advantageous embodiment of the proposed structural assembly
- the first surface of each tap of the plurality of taps is situated at a height which is smaller than a depth of the notch in which the tap is received.

Reference is made to further statements (also including advantages) with regard to this embodiment. "Smaller" can mean particularly, that the absolute value of the height is smaller than the absolute value of the depth of the notch.

The presented embodiment allows, that an edged, particularly cuboid or nearly cuboid, space for an arc welding seam can be provided allowing for a particularly strong arc welding connection. Furthermore, an even distribution of arc welding material allows for a better geometry of the laser-welded joint in the area of the tap-notch combination and nearby.

In an advantageous embodiment of the proposed structural assembly
- the first surface of each tap of the plurality of taps is situated at a height which does not exceed 50 % of the depth of the notch in which the tap is received.

Reference is made to further statements (also including advantages) with regard to this embodiment. Lower limits of the height in which the first surface of each tap is located, can be for example 5 % or 10 % or 20 % or 30 % or 40 % of the depth of the notch in which the tap is received. The presented embodiment allows, that a particularly big, edged, particularly cuboid or nearly cuboid, space for an arc welding seam can be provided allowing for a particularly strong arc welding connection. In this embodiment, none or only a little amount of arc welding material protrudes over the outer contours of the second sheet metal element. This allows for a better geometry of the laser-welded joint in the area of the tap-notch combination and nearby.

In an advantageous embodiment of the proposed structural assembly
- for each tap of the plurality of taps, the first surface of the tap and inner surfaces of the notch in which the tap is received form a space.

Reference is made to further statements (also including advantages) with regard to this embodiment. The space generally allows for the laser-welded joint - when continued across an arc welding seam in the space - having a high quality and high mechanical strength in the area of a tap-notch combination and nearby, since a change in the geometry of the laser-welded joint is not necessary or only small. This aspect allows further for a particularly strong arc welding connection, particularly, since the space can have edges consisting of inner surfaces of the notch in which the tap is received and the first surface of the tap.

In an advantageous embodiment of the proposed structural assembly,
- for each tap of the plurality of taps, an additional arc welding seam is provided in the space connecting the tap and the notch in which the tap is received.

The arc welding seam allows for secure pre-positioning by basting the first sheet metal element and the second sheet metal element. Furthermore, it improves the overall mechanical strength of the structural assembly.

In an advantageous embodiment of the proposed structural assembly,
- the second sheet metal element surpasses or undercuts the first sheet metal element at the first edge and/or
- the at least one protrusion surpasses or undercuts the at least one slot-shaped hole.

The second sheet metal element surpassing or undercutting the first sheet metal forms an angled edge, particularly a right-angled edge, between the first edge and the second edge. The angled edge can be understood as and/or comprise a first overhang or undercut. The angled edge can be particularly suitable to receive the laser-welded joint at least partly. The angled edge being angled (particularly right-angled) improves the overall mechanical strength of the laser-welded joint. The second sheet metal element can surpass or undercut the first sheet metal element for example by 1-2, 2-5 or 5-10 mm.

The at least one protrusion surpassing or undercutting the at least one slot-shaped hole forms a further angled edge, particularly a right-angled edge. The further angled edge can be particularly suitable to receive the further laser-welded joint at least partly. The further angled edge can be understood as and/or comprise a second overhang or undercut. The further angled edge being angled (particularly right-angled) improves the overall mechanical strength of the further laser-welded joint. The at least one protrusion can surpass or undercut the at least one slot-shaped hole for example by 1-2, 2-5 or 5-10 mm.

In an embodiment of the structural assembly,
- the taps in each case comprise bevelled and/or chamfered outer surfaces and/or
- the notches in each case comprise bevelled and/or chamfered inner surfaces.

Reference is made to the statements (also including advantages) above.

A chamfer generally can be a flat, angled cut or material omission situated along, in each case, an outer surface of the taps. The taps (with chamfered outer surfaces) can comprise a first section with a cuboid shape called socket - and a second narrowing section, for example with a trapezoidal prism shape or a triangular prism shape. The two sections can be arranged one after another along the heights of the taps, particularly in a way that the taps become narrower in the upward direction of their heights (height direction). A socket is advantageous for unambiguous pre-positioning and improves impermeability, if, at the socket, surfaces of taps and notches are very close.

The notches (with chamfered inner surfaces) can comprise a first section with a cuboid shape -called socket - and a second section with a trapezoidal prism shape, particularly in a way that the notches become wider in the upward direction of their heights (height direction).

A bevel can be an inclined cut or material omission that connects two parallel surfaces, forming a sloped edge. Unlike a chamfer, a bevel can, in each case, span the entire length of an outer surface of the taps. The taps (with bevelled outer surfaces) can be, in each case, triangles or trapezoidal prisms (that is, they can be triangles or trapezoids, respectively, when regarded in a longitudinal section). The triangles or trapezoidal prisms can be arranged along the heights of the taps, particularly in a way that the taps become narrower in the upward direction of their heights (height direction).

The notches (with bevelled inner surfaces) can have the shape of a trapezoidal prisms, particularly in a way that the notches become wider in the upward direction of their heights (height direction).

Angles of the bevelled and/or chamfered outer surfaces of the taps can be, for example 20-30, 30-40, 40-50, 50-60, 60-70 degrees with regard to a height axis of the taps. In practical applications, taps with a first section with sockets and a second section with a trapezoidal prism shape, wherein outer surfaces of the trapezoidal prism shape have angles of 50 degrees with regard to a height axis of the taps, have been proven as beneficial. Sockets allow for a higher impermeability between the taps and the notches. Furthermore, pre-positioning is improved.

The proposed embodiment allows for easy and quick self-positioning of the first sheet metal element and the second sheet metal element. Furthermore, fixed pre-positioning and/or basting by arc welding is easily feasible, since room for HV-seams or HY-seams or Y-seams or V-seams is available.

In an embodiment of the structural assembly, additional arc welding seams are provided connecting the taps and the notches at the bevelled and/or chamfered outer surfaces and/or at the bevelled and/or chamfered inner surfaces.

The arc welding seams have the function to ensure fixed pre-positioning and/or basting in a production process of the structural assembly. Production of the structural assembly is simplified and shape accuracy of the structural assembly is improved. Furthermore, fixed pre-positioning and/or basting by arc welding is easily feasible, since room for HV-seams or HY-seams or Y-seams or V-seams is available by means of the bevelled and/or chamfered outer surfaces (of the taps) and/or the bevelled and/or chamfered inner surfaces (of the notches). Generally, bevelled and/or chamfered outer surfaces of the at least one protrusion can serve for the same purpose.

In an embodiment of the structural assembly, the at least one protrusion comprises a bevelled or chamfered outer surface.

The at least one protrusion (with a bevelled outer surface) can have a trapezoidal prism geometry. Alternatively, the at least one protrusion (with a chamfered outer surface) can comprise a first section with a cuboid shape - called protrusion socket - and a second section with a trapezoidal prism shape. The protrusion socket allows for a higher impermeability of the at least one protrusion in the at least one slot-shaped hole.

Angles of the bevelled and/or chamfered outer surface of the at least one protrusion can be, for example 20-30, 30-40, 40-50, 50-60, 60-70 degrees with regard to a height axis (height direction) of the at least one protrusion. In practical applications, angles of 50 degrees-have been proven as beneficial.

Production of the structural assembly is simplified since placing of the at least one protrusion in the at least one slot-shaped hole is facilitated.

In an embodiment of the structural assembly, the first sheet metal element and the second sheet metal element are part of a beam structure.

A beam structure is a very common and often used type of geometry in structural assemblies of railway vehicles. Therefore, using the taps and the notches to connect parts of a beam structure realise the described advantages to a particularly high degree.

Particularly, a beam can have a profile with several necessary connections between a multitude of sheet metal elements (for example four sheet metal elements). By way of example, a beam with a box profile may require four connections on the four corners of the profile, particularly, when straight sheet metal elements are used. Because of a high amount of connections, a beam produced by methods of the state of the art (particularly by MAG welding), distortions by heat input during welding would have a particularly high influence. On the other hand, regarding the proposed structural assembly comprising laser-welded joints, this problem does not exist. Consequently, further machining and/or milling is not necessary and thinner sheet metal elements can be used. Thus, weight, production time, the amount of work, production costs of the structural assembly as well as operating costs of the railway vehicle can be reduced significantly.

In an advantageous embodiment of the structural assembly, the structural assembly is or comprises
- a bolster, a spring dome, a wheelhouse or
- a part of one of the aforementioned components.

A bolster, a spring dome and a wheelhouse (for example a central wheelhouse or an outer wheelhouse) generally are complex structural assemblies requiring a high number of connections between different sheet metal elements. Due to the high number of connections, the described advantages are realised to a particularly high degree. Thus, weight, production time, production costs as well as operating costs of the railway vehicle can be reduced significantly.

In an advantageous embodiment of the structural assembly, the structural assembly is or comprises
- an underframe end girder, a roof end girder, a cabin structure, a crash structure, an underframe assembly or
- a part of one of the aforementioned components.

An underframe end girder, a roof end girder, an underframe assembly, a cabin structure (for example a cabin portal) and a crash structure (for example a front crash structure) generally are complex structural assemblies requiring a high number of connections between different sheet metal elements. Due to the high number of connections, the described advantages are realised to a particularly high degree. Thus, weight, production time, production costs as well as operating costs of the railway vehicle can be reduced significantly.

Furthermore, it is proposed a railway vehicle body comprising a structural assembly according to the invention.

The railway vehicle body can particularly be the body of a lightweight rail vehicle like a tram vehicle, a city railway vehicle or an underground railway vehicle. However, the invention is also applicable to other types of railway vehicles.

Generally, with regard to possible embodiments of the proposed railway vehicle body, full reference is made to the presented embodiments of the structural assembly (and vice versa) and the method (and vice versa) and to all advantages as far as applicable.

Furthermore, it is proposed a method for producing a structural assembly according to the invention, comprising
- positioning the first sheet metal element and the second sheet metal element in a connecting orientation relative to each other, wherein, in the connecting orientation, each tap of the plurality of taps is, in each case, received in a notch of the plurality of notches,
- positioning the third sheet metal element and the fourth sheet metal element in a further connecting orientation relative to each other, wherein, in the further connecting orientation, the at least one protrusion is received in the at least one slot-shaped hole,
- basting the first sheet metal element and the second sheet metal element by welding,
- connecting the first edge and the second edge to each other by laser-welding,
- connecting the at least one protrusion to the fourth sheet metal element by laser-welding along the at least one slot-shaped hole.

The connecting orientation and the further connecting orientation can be, in each case, an unambiguously defined position (of the first sheet metal element with regard to the second sheet element and of the third sheet metal element with regard to the fourth sheet metal element), for example, by using taps and notches configured to fit (or mesh) together in only one predefined orientation, mutual position or alignment. The at least one protrusion and the at least one slot-shaped hole can be also configured to fit (or mesh) together in only one predefined orientation, mutual position or alignment. Such principles correspond to Poka Yoke.

The expression "along the at least one slot-shaped hole" can mean, that a further laser-welded joint follows the contour of the at least one slot-shaped hole. It can alternatively mean, that the further laser-welded joint reaches into or onto regions between chamfered or bevelled outer surfaces of the at least one protrusion and inner surfaces of the at least one slot-shaped-hole.

The basting can be performed using arc welding (in this case, "welding" can be "arc welding"). It can be performed manually. The basting is a very quick and easily realisable pre-positioning step improving shape accuracy of the structural assembly. The combination of basting and subsequent laser welding requires a much smaller amount of work and is much quicker than welding all connections by MAG welding according to the state of the art.

In an advantageous embodiment of the proposed method,
- each tap of the plurality of taps comprises a first surface extending along a plane that is situated orthogonally to a height direction of the tap,
wherein arc welding is performed connecting the tap and the notch in which the tap is received.

Reference is made to the statements (also including advantages) with regard to the corresponding embodiments of the proposed structural assembly.

In an advantageous embodiment of the proposed method,
- for each tap of the plurality of taps, the first surface of the tap and inner surfaces of the notch in which the tap is received form a space,
wherein, for each tap of the plurality of taps, the arc welding is performed in the space.

Reference is made to the statements (also including advantages) with regard to the corresponding embodiments of the proposed structural assembly.

In an embodiment of the proposed method,
- the taps comprise bevelled and/or chamfered outer surfaces and/or
- the notches comprise bevelled and/or chamfered inner surfaces,
wherein arc welding is performed at the bevelled and/or chamfered outer surfaces and/or the bevelled and/or chamfered inner surfaces.

The bevelled and/or chamfered surfaces allow for easy basting by are welding, since the offer space for welding seams, for example HV-seams or HY-seams or Y-seams or V-seams between the taps and the notches.

In an embodiment of the proposed method,
- the second sheet metal element surpasses or undercuts the first sheet metal element at the first edge forming a first overhang or undercut, wherein connecting the first edge and the second edge to each other by laser-welding is performed at the first overhang or undercut and/or
- the at least one protrusion surpasses or undercuts the at least one slot-shaped hole forming a second overhang or undercut, wherein connecting the at least one protrusion to the fourth sheet metal element is performed at the second overhang or undercut.

Generally, with regard to all possible embodiments of the proposed method for producing, full reference is made to the presented embodiments of the structural assembly (and vice versa) and the railway vehicle body (and vice versa) and to all the mentioned advantages as far as applicable.

Exemplary embodiments of the invention will now be described with reference to the accompanying drawing. The individual figures of the drawing show:
- Fig. 1:: shows a structural assembly according to the invention (a bolster),
- Fig. 2:: an exploded, partially transparent and schematic view of the bolster shown in Fig. 1,
- Fig. 3:: a detailed view of the bolster shown in Fig. 1,
- Fig. 4:: a cutout view of a beam structure as used in the bolster shown in Fig. 1. In particular, the figure shows an example of what notches can look like.
- Fig. 5:: an exploded view of a first sheet metal element comprising a plurality of taps and a second sheet metal element comprising a plurality of notches as used in the bolster shown in Fig. 1,
- Fig. 6:: a detailed view of the bolster shown in Fig. 1,
- Fig. 7:: a structural assembly according to the invention (a spring dome),
- Fig. 8:: a detailed view of the spring dome shown in Fig. 7,
- Fig. 9:: a detailed view of the spring dome shown in Fig. 7,
- Fig. 10:: an assembly of two spring domes according to the state of the art,
- Fig. 11:: a first sheet metal element with a tap and a second sheet metal element with a notch in unconnected state according to another embodiment of a structural assembly according to the invention in an exploded view,
- Fig. 12a:: the first sheet metal element and the second sheet metal element shown in Fig. 11 in a connected state,
- Fig. 12b:: the first sheet metal element and the second sheet metal element shown in Fig. 12a from another perspective (view from above),
- Fig. 13:: a first sheet metal element and a second sheet metal element according to another embodiment of the structural assembly according to the invention, wherein the second sheet metal element surpasses the first sheet metal element at the first edge,
- Fig. 14:: a protrusion of a third sheet metal element and a fourth sheet metal element with a slot-shaped hole according to another embodiment of the structural assembly according to the invention, wherein the protrusion surpasses the slot-shaped hole.

The same reference symbols or numbers are used for the same or similar parts or items.

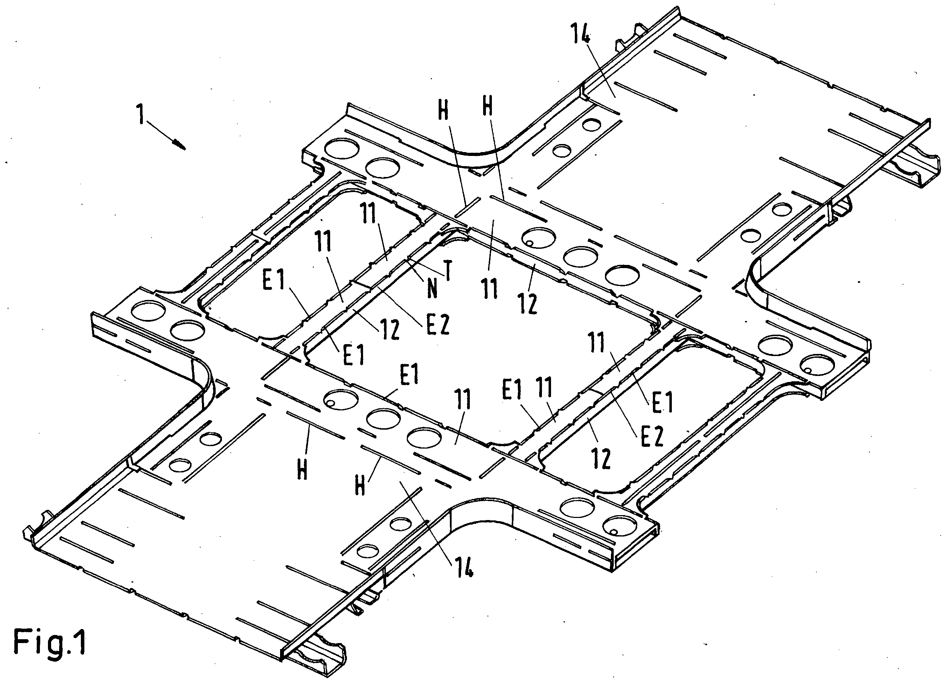

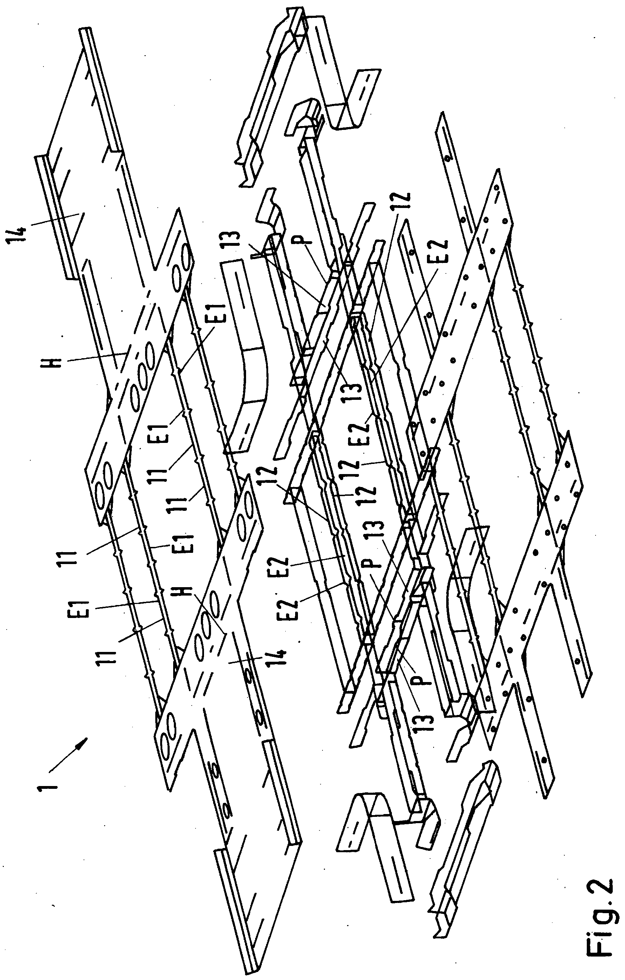

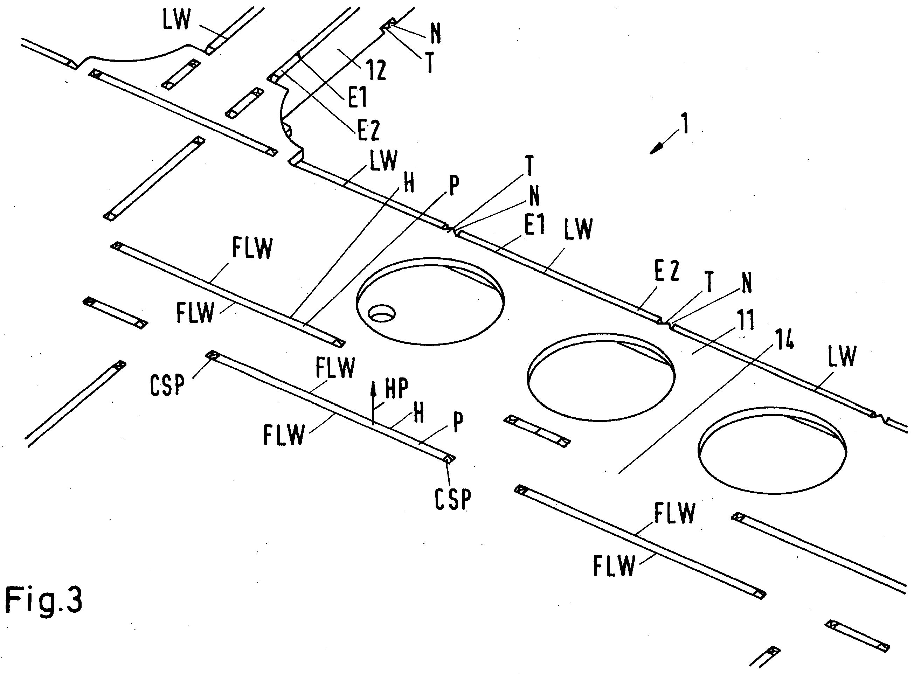

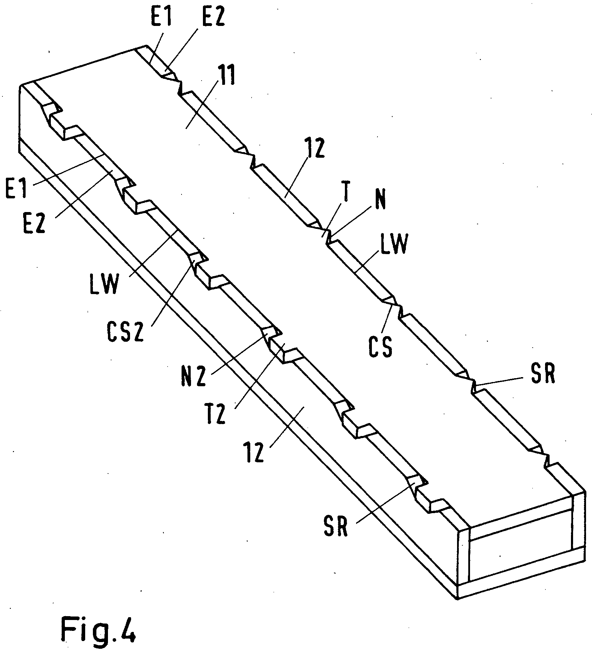

Fig 1. shows a structural assembly 1 according to the invention (a bolster). The bolster comprises a large first sheet metal element 11. The first sheet metal element 11 comprises a multitude of taps T (see enlarged views in Fig. 3, 4, 5) at first edges E1. The first sheet metal element 11 is also a fourth sheet metal element 14 comprising a multitude of slot-shaped holes H. Orthogonally oriented second sheet metal elements 12 are provided comprising notches N at second edges E2. Between the first edges E1 and the second edges E2, laser-welded joints LW (see Fig. 3, 4) are provided connecting the first edges E1 and the second Edges E2. Inside the slot-shaped holes H, protrusions P (see Fig. 2, 3, 6, 8, 9) are provided. Further laser-welded joints (see Fig. 3, 6, 9) are provided connecting inner walls and/or surroundings of the slot-shaped holes H and the protrusions P.

Fig. 2 shows an exploded, partially transparent and schematic view of the structural assembly 1 (the bolster) shown in Fig. 1. Particularly, the first edges E1 and the second Edges E2 are better distinguishable in this view. Furthermore, third sheet metal elements 13 are shown, comprising the protrusions P, which are located inside the slot-shaped holes H in an assembled state of the structural assembly 1.

Fig. 3 shows a detailed view of the bolster shown in Fig. 1. At contact lines of the first edges E1 and the second edges E2, the laser-welded joints LW are provided to connect the first sheet metal element 11 in each case with the second sheet metal elements 12. The laser-welded joints LW (not shown) can run straight over the taps T or, alternatively follow at least partly the outer contour of the taps T (and partly reach into or onto [for example, if an arc welding seam is provided] the notches N). The further laser-welded joints FLW are provided at the slot-shaped holes H and follow in each case the contour of the slot-shaped holes H (along contact lines of the protrusions P and inner walls of the slot-shaped holes H) to connect the protrusions P with the fourth sheet metal element 14. The further laser-welded joints FLW can - at the short parts of the slot-shaped holes H - follow the contours of the slot-shaped holes H or reach into or onto [for example, if an arc welding seam is provided] chamfered outer surfaces CSP of the protrusions P (50 degree angle with regard to a height direction HP of the protrusions P).

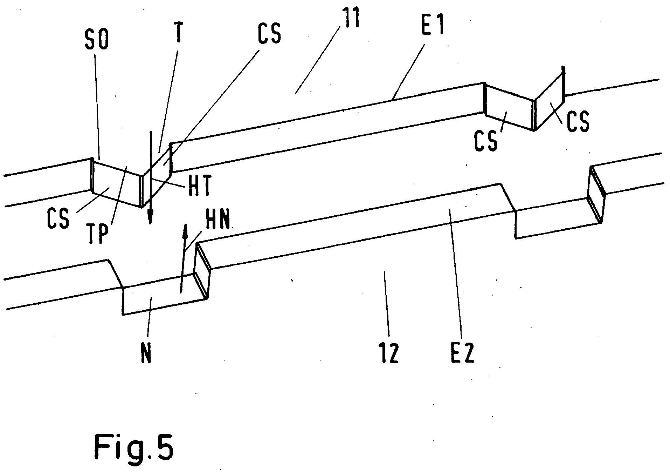

Fig. 4 in particular shows an example of what notches can look like. Between the taps T and notches N - since the taps T comprise chamfered outer surfaces CS (see also Fig. 5) -, basting seam regions SR are provided. In these regions, basting welding seams (being produced by arc welding) can be provided, allowing for pre-tacking and pre-positioning the first sheet metal element 11 in an orientation being suitable for fixing the corresponding second sheet metal element 12 to the first sheet metal element 11. A second type of taps T2 is also provided at the first sheet metal element 11. Furthermore, a second type of notches N2 is provided at the corresponding second sheet metal element 12. The notches N2 comprise chamfered inner surfaces CS2, also offering basting seam regions SR for basting welding seams, which can be provided, also allowing for pre-tacking and pre-positioning the first sheet metal element 11 in the above-described orientation with regard to the two shown second sheet metal elements 12. A false orientation of the first sheet metal element 11 is avoided due to different types of taps and notches, corresponding to Poka Yoke principles.

Fig. 5 shows an exploded view of the first sheet metal element 11 comprising the taps T and the second sheet metal 12 element comprising the notches N as used in the bolster shown in Fig. 1 (structural assembly 1). The taps T each comprise sockets SO (as a first section) having a cuboid shape. Furthermore, the taps T comprise triangular prism shape regions TP (as a second section on top of the first section) each having a shape of a triangular prism. The second section is on top of the first section when regarded in a height direction HT of the taps T. Thus, the taps comprise the chamfered outer surfaces CS. The taps T become narrower along the height direction HT. Alternatively, the taps T could have only the second section (that is, the taps T would have triangular prism shapes without sockets) - this would correspond to bevelled surfaces. The notches N have a cuboid shape. For better understanding, the height direction HN of the notches N is also given. The notches N2 (see Fig. 4) comprise chamfered surfaces CS2, so that the notches N2 become wider along their height direction.

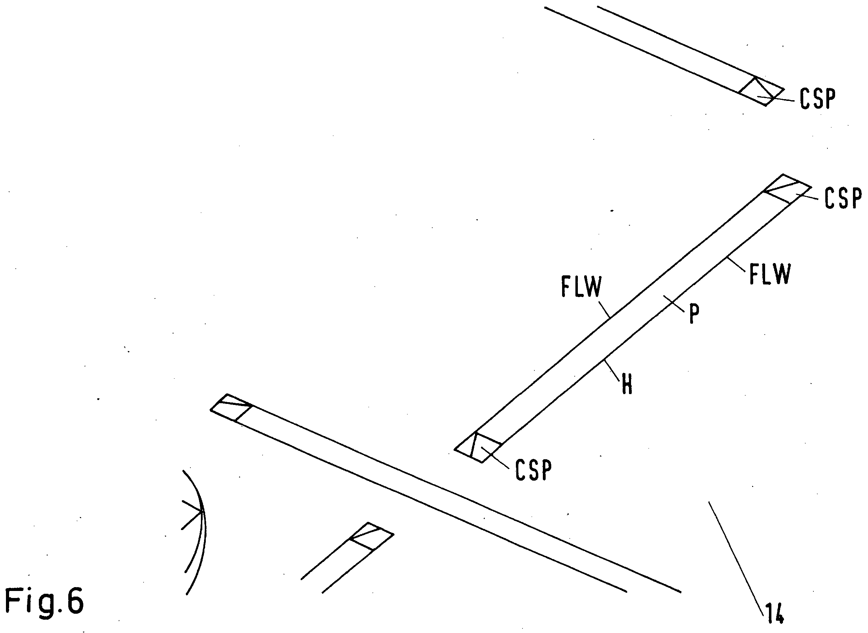

Fig. 6 shows a detailed view of the bolster shown in Fig. 1. Particularly, a detailed view of one of the slot-shaped holes H of the fourth sheet metal element 14 (which is the first sheet metal element 11) is given. The chamfered outer surfaces CSP of the protrusions P allow for better and easier pre-positioning. Also, basting via arc welding is possible (not shown) in the regions between the chamfered outer surfaces CSP and inner surfaces of the slot-shaped-hole H, since these regions offer space for arc welding seams.

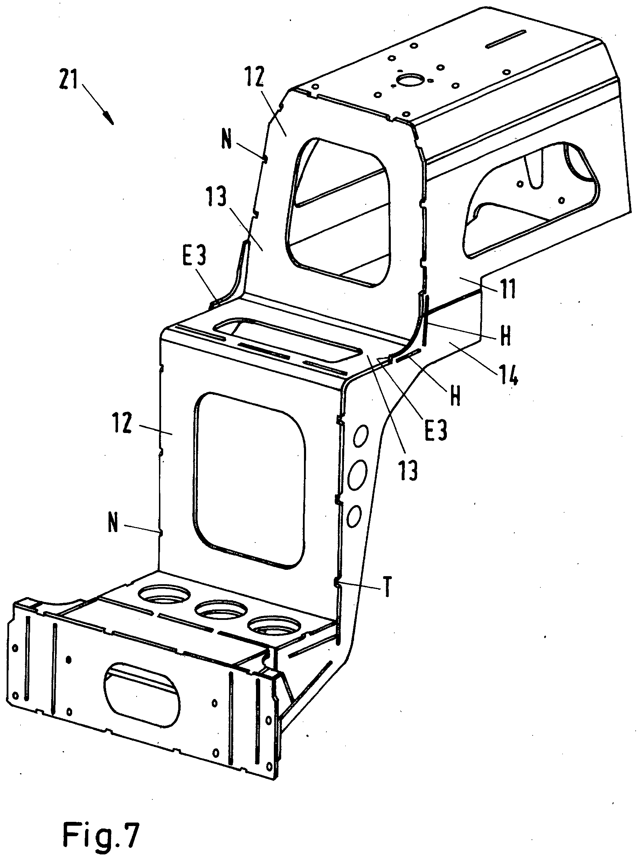

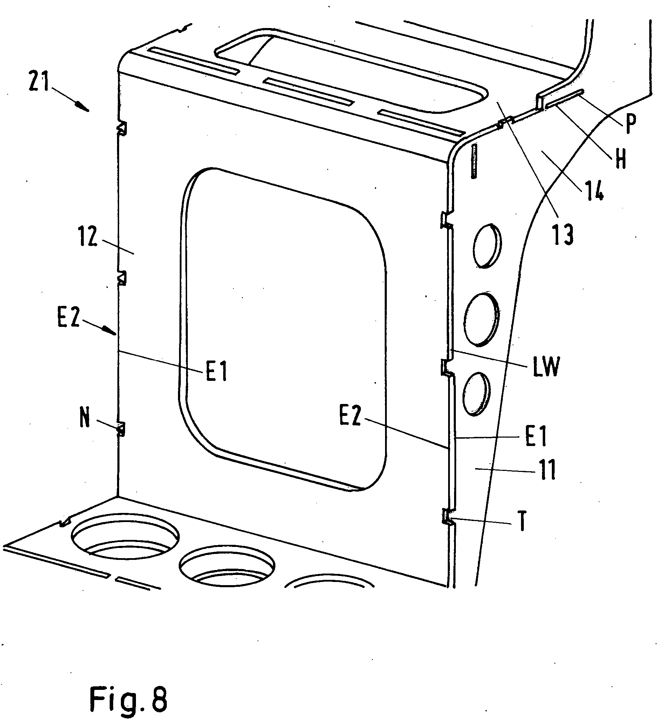

Fig. 7 shows a structural assembly 21 according to the invention (a spring dome). Notches N and taps T generally are provided on outer edges (as in the structural assembly 1), slot-shaped holes H are provided at inner regions of a fourth sheet metal element 14, which is also a first sheet metal element 11 comprising taps T. A second sheet metal element 12 is also shown comprising notches N, which is also a third sheet metal element 13 comprising protrusions P (see Fig. 8) in the slot-shaped holes H. Protrusions P are provided at third edges E3.

Fig. 8 shows a detailed view of the spring dome shown in Fig. 7. The taps T and the notches N are better visible. Similar to the structural assembly 1, basting via arc welding is possible, since taps T and/or notches N can comprise chamfered and/or bevelled surfaces. Laser-welded joints LW (not shown) are provided to connect the first edges E1 and the second edges E2.

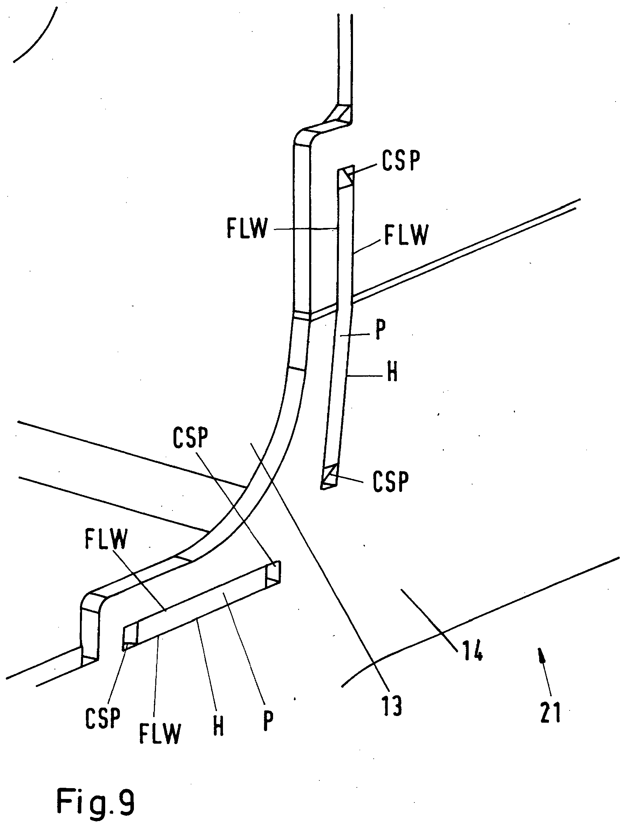

Fig. 9 shows another detailed view of the spring dome shown in Fig. 7. Further laser-welded joints FLW (not shown) are provided at the outer contours of the slot-shaped holes H to connect the protrusions P of the third sheet metal element 13 with the fourth sheet metal element 14. The further laser-welded joints FLW can - at the short parts of the slot-shaped holes H - follow the contours of the slot-shaped holes H or reach into or onto [for example, if an arc welding seam is provided] chamfered outer surfaces CSP of the protrusions P (30 degree angle with regard to a height direction HP of the protrusions P). Also, basting via arc welding is possible (not shown) in the regions between the chamfered outer surfaces CSP and inner surfaces of the slot-shaped-hole H, since these regions offer space for arc welding seams.

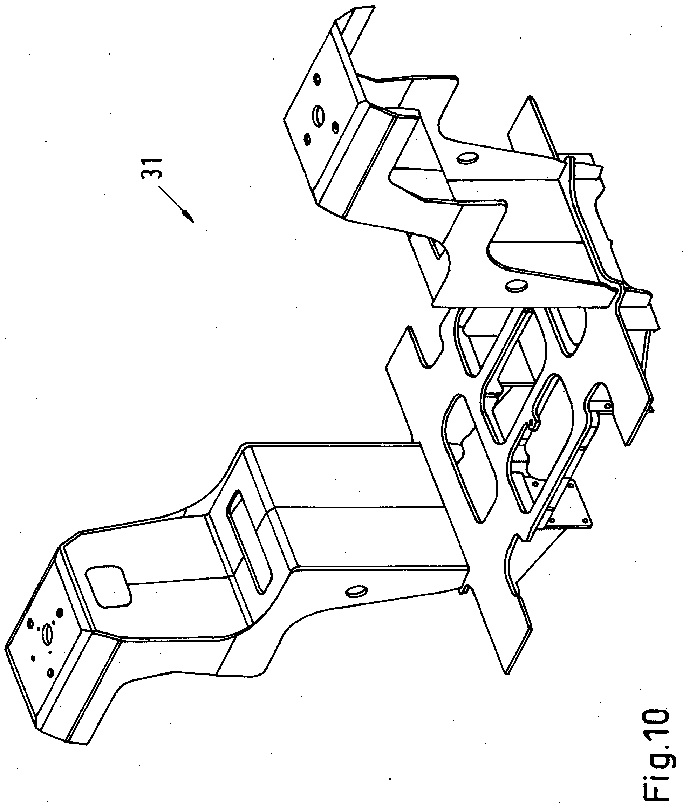

Fig. 10 shows a structural assembly 31 of two spring domes according to the state of the art. It is produced entirely by MAG welding. Thicker sheet metal elements have to be used and machining and milling after welding are necessary. A similar structural assembly according to the invention is lighter (20 kg or more), furthermore, production is faster and only requires a smaller amount of work.

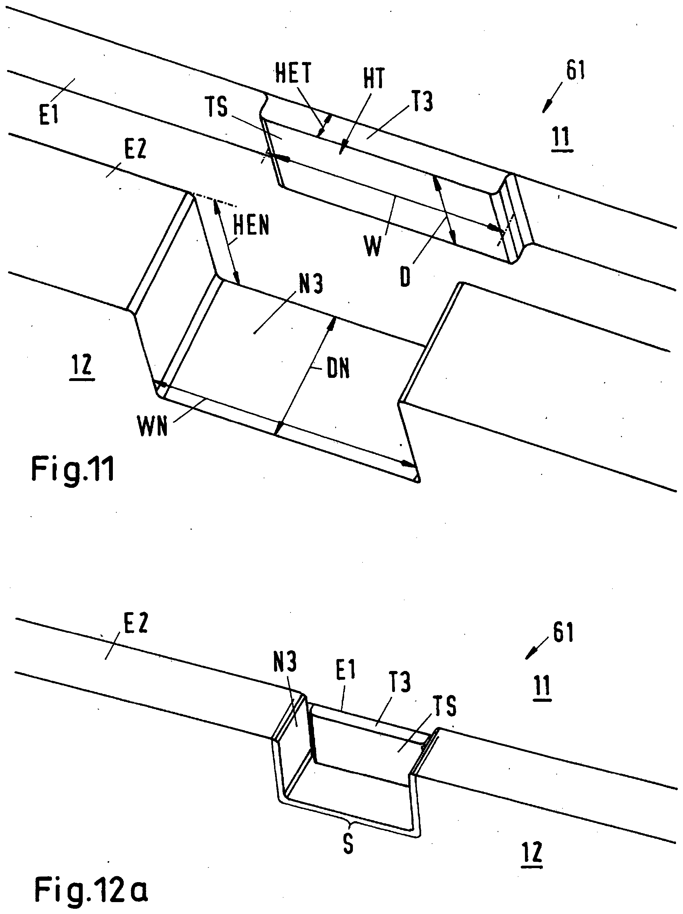

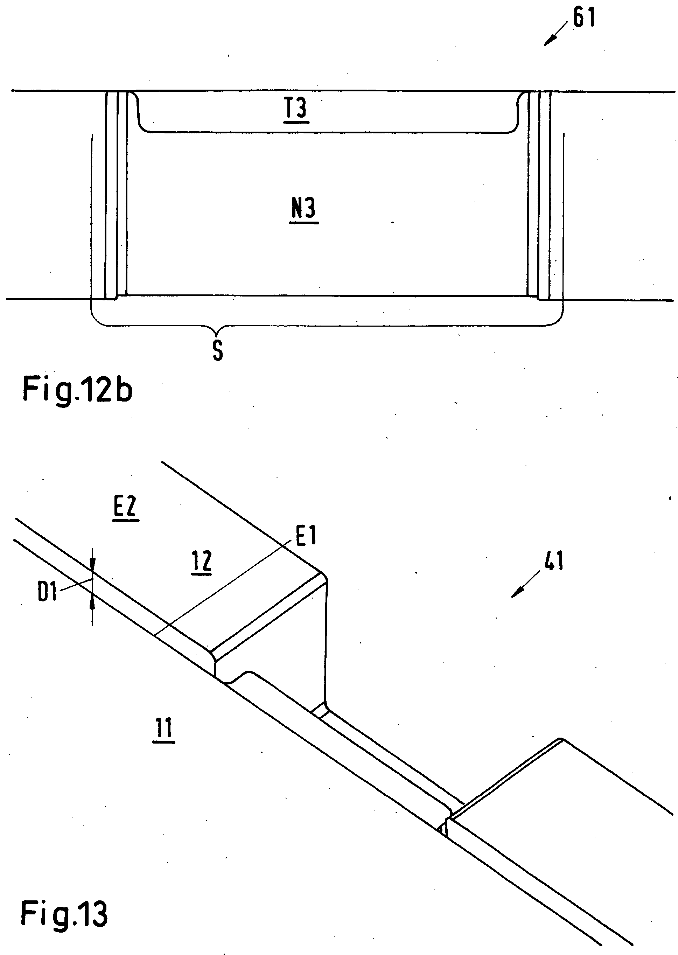

Fig. 11 shows a first sheet metal element 11 with a tap T3 and a second sheet metal element 12 with a notch N3 in an unconnected state according to another embodiment of a structural assembly 61 (see Fig. 12a and 12b in assembled state) according to the invention. In Fig 11, the assembly 61 is shown in an exploded view. The tap T3 has a width W, a depth D and a height HET. The notch N3 has a width WN, a depth DN and a height HEN. The depth D of the tap T3 can be only slightly smaller than the height HEN of the notch N3. The height HET of the tap T3 can be much smaller than the depth DN of the notch N3. The width W of the tap T3 can be only slightly smaller than the width WN of the notch N3. The tap T3 comprises an even first surface TS along a plane orthogonal to a height direction HT of the height HET of the tap T3.

Fig. 12a shows a non-exploded view of the assembly 61. The tap T3 is situated in the notch N3. A space S is formed by the first surface TS of the tap T3 and surrounding inner surfaces (a bottom surface and two side surfaces) of the notch N3. In the space S, an arc welding seam for basting the first sheet metal element 11 to the second sheet metal element 12 for prepositioning can be placed (not shown). Smoothing radiuses can be provided at the tap T3 and the notch N3.

Fig. 12b shows a non-exploded view of the assembly 61 from another perspective (above). The space S occupies a large part of the notch N3.

Fig. 13 shows a first sheet metal element 11 and a second sheet metal element 12 according to another embodiment of a structural assembly 41 according to the invention, wherein the second sheet metal element 12 surpasses the first sheet metal element 11 at the first edge E1. A distance D1 by which the second sheet metal element 12 surpasses the first sheet metal element 11 can be, for example, 1 mm. The angle between the first sheet metal element 11 and the second sheet metal element 12 at the first edge E1, which is an angled edge between the first sheet metal element 11 and the second sheet element 12 can be used to receive at least partially a laser-welded joint LW (not shown).

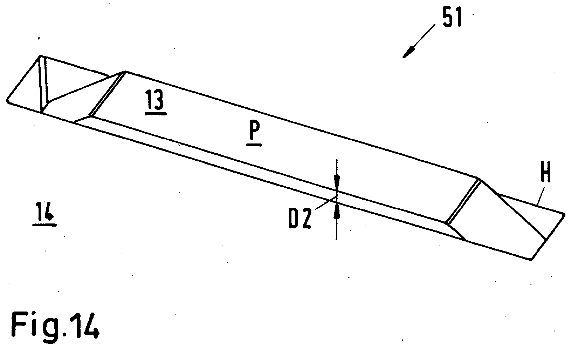

Fig. 14 shows a protrusion P of a third sheet metal element 13 and a fourth sheet metal element 14 with a slot-shaped hole H according to another embodiment of a structural assembly 51 according to the invention, wherein the protrusion P surpasses the slot-shaped hole H. A distance D2 by which the protrusion P surpasses the slot-shaped hole H can be, for example, 1 mm. The angle between the protrusion P and the fourth sheet metal element 14 can be used to receive at least partially a further laser-welded joint FLW (not shown).

### Reference signs

1 structural assembly
11 first sheet metal element
12 second sheet metal element
13 third sheet metal element
14 fourth sheet metal element
21 structural assembly
31 structural assembly (state of the art)
41 structural assembly
51 structural assembly
61 structural assembly
CS chamfered outer surface (of tap)
CS2 chamfered inner surface (of notch)
CSP chamfered outer surface (of protrusion)
D depth (tap)
D1 distance
D2 distance
DN depth (notch)
E1 first edge
E2 second edge
E3 third edge
FLW further. laser-welded joint
HET height (tap)
H slot-shaped hole
HEN height (notch)
HN height direction (notch)
HP height direction (protrusion)
HT height direction (tap)
LW laser-welded joint
N notch
N2 notch
N3 notch
P protrusion
S space (for arc welding)
SO socket
SR basting seam region
T tap
T2 tap
T3 tap
TP triangular prism shape region
TS first surface
W width (tap)
WN width (notch)

## Claims

1. A structural assembly (1, 21, 41, 51, 61), configured to be integrated in a railway vehicle body, comprising
- a first sheet metal element (11), comprising a first edge (E1) with a plurality of taps (T, T2, T3),
- a second sheet metal element (12), comprising a second edge (E2) with a plurality of notches N, N2, N3),
- a third sheet metal element (13), comprising a third edge (E3) with at least one protrusion (P),
- a fourth sheet metal element (14), comprising at least one slot-shaped hole (H),
wherein each tap (T, T2, T3) of the plurality of taps (T, T2, T3) is received, in each case, in a notch (N, N2, N3) of the plurality of notches N, N2, N3),
wherein the first edge (E1) and the second edge (E2) are connected to each other by a laser-welded joint (LW),
wherein the at least one protrusion (P) is received in the at least one slot-shaped hole (H),
wherein the at least one protrusion (P) is connected to the fourth sheet metal element (14) by a further laser-welded joint (FLW) along the at least one slot-shaped hole (H).

2. The structural assembly (1, 21, 41, 51, 61) according to claim 1, **characterised in that**
- each tap (T, T2, T3) of the plurality of taps (T, T2, T3) comprises a first surface (TS) extending along a plane that is oriented orthogonally to a height direction (HT) of the tap (T, T2, T3).

3. The structural assembly (1, 21, 41, 51, 61) according to claim 2, **characterised in that**
- the first surface (TS) is even or nearly even.

4. The structural assembly (1, 21, 41, 51, 61) according to claim 1 or 2, **characterised in that**
- the first surface (TS) of each tap (T, T2, T3) of the plurality of taps (T, T2, T3) extends nearly across the width (WN) and/or the height (HEN) of the notch (N, N2, N3) in which the tap (T, T2, T3) is received.

5. The structural assembly (1, 21, 41, 51, 61) according to any one of claims 2-4, **characterised in that**
- the first surface (TS) of each tap (T, T2, T3) of the plurality of taps (T, T2, T3) is situated at a height (HET) which is smaller than a depth (DN) of the notch (N, N2, N3) in which the tap (T, T2, T3) is received.

6. The structural assembly (1, 21, 41, 51, 61) according to any one of claims 2-5, **characterised in that**
- the first surface (TS) of each tap (T, T2, T3) of the plurality of taps (T, T2, T3) is situated at a height (HET) which does not exceed 50 % of the depth (DN) of the notch (N, N2, N3) in which the tap (T, T2, T3) is received.

7. The structural assembly (1, 21, 41, 51, 61) according to any one of claims 2-6, **characterised in that**
- for each tap (T, T2, T3) of the plurality of taps (T, T2, T3), the first surface (TS) of the tap (T, T2, T3) and inner surfaces of the notch (N, N2, N3) in which the tap (T, T2, T3) is received form a space (S).

8. The structural assembly (1, 21, 41, 51, 61) according to claim 7, **characterised in that**,
- for each tap (T, T2, T3) of the plurality of taps (T, T2, T3), an additional arc welding seam is provided in the space (S) connecting the tap (T, T2, T3) and the notch (N, N2, N3) in which the tap (T, T2, T3) is received.

9. The structural assembly (1, 21, 41, 51, 61) according to any one of claims 1-8, **characterised in that**
- the second sheet metal element (12) surpasses or undercuts the first sheet metal element (11) at the first edge (E1) and/or
- the at least one protrusion (P) surpasses or undercuts the at least one slot-shaped hole (H).

10. The structural assembly (1, 21) according to claim 1, **characterised in that**
- the taps (T, T2) in each case comprise bevelled and/or chamfered outer surfaces (CS) and/or
- the notches (N, N2) in each case comprise bevelled and/or chamfered inner surfaces (CS2).

11. The structural assembly (1, 21) according to claim 10, **characterised in that** additional arc welding seams are provided connecting the taps (T, T2) and the notches (N, N2) at the bevelled and/or chamfered outer surfaces (CS) and/or at the bevelled and/or chamfered inner surfaces (CS2).

12. The structural assembly (1, 21, 41, 51, 61) according to any one of claims 1-11, **characterised in that** the structural assembly (1, 21, 41, 51, 61) is or comprises
- a bolster, a spring dome, a wheelhouse or
- a part of one of the aforementioned components.

13. The structural assembly (1, 21, 41, 51, 61) according to any one of claims 1-11, **characterised in that** the structural assembly (1, 21, 41, 51, 61) is or comprises
- an underframe end girder, a roof end girder, a cabin structure, a crash structure, an underframe assembly or
- a part of one of the aforementioned components.

14. A railway vehicle body comprising a structural assembly (1, 21, 41, 51, 61) according to any one of claims 1-13.

15. A method for producing a structural assembly (1, 21, 41, 51, 61) according to any one of claims 1-13, comprising
- positioning the first sheet metal element (11) and the second sheet metal element (12) in a connecting orientation relative to each other, wherein, in the connecting orientation, each tap (T, T2, T3) of the plurality of taps (T, T2, T3) is, in each case, received in a notch (N, N2, N3) of the plurality of notches N, N2, N3),
- positioning the third sheet metal element (12) and the fourth sheet metal element (14) in a further connecting orientation relative to each other, wherein, in the further connecting orientation, the at least one protrusion (P) is received in the at least one slot-shaped hole H,
- basting the first sheet metal element 11 and the second sheet metal element 12 by welding,
- connecting the first edge (E1) and the second edge (E2) to each other by laser-welding,
- connecting the at least one protrusion (P) to the fourth sheet metal element (14) by laser-welding along the at least one slot-shaped hole (H).
